# EUROPÄISCHE PATENTSCHRIFT

(11) **EP 3 235 381 B1**
(45) Veröffentlichungstag und Bekanntmachung des Hinweises auf die Patenterteilung: **12.08.2020**
(21) Anmeldenummer: 17166386.7
(22) Anmeldetag: 12.04.2017
(51) Int. Cl.: A01M 13/00

(54) **ZUFUHREINRICHTUNG, DRUCKENTWESUNGSANORDNUNG, VERFAHREN ZUR DRUCKENTWESUNG**
SUPPLY DEVICE, PRESSURE DISINFESTATION ASSEMBLY, METHOD FOR PRESSURE DISINFESTATION
DISPOSITIF D'INTRODUCTION, AGENCEMENT DE DÉSINFESTATION, PROCÉDÉ DE DÉSINFESTATION

(30) Priorität: 19.04.2016 DE 102016206593
(43) Veröffentlichungstag der Anmeldung: 25.10.2017
(73) Patentinhaber: Carbo Kohlensäurewerke GmbH & Co. KG, 53557 Bad Hönningen (DE)
(72) Erfinder: DAHMS, Denis, 53639 Königswinter (DE); KRAUS, Konrad Jürgen, Dr., 53557 Bad Hönningen (DE)
(74) Vertreter: MFG Patentanwälte Meyer-Wildhagen Meggle-Freund Gerhard PartG mbB

(56) Entgegenhaltungen:
- DE-A1- 19 501 783
- JP-A- 2016 002 279

## Beschreibung

Die vorliegende Erfindung bezieht sich allgemein und insbesondere auf eine Zufuhreinrichtung zur Durchführung eines Verfahrens zur Druckentwesung, auf eine Druckentwesungsanordnung und auf ein Verfahren zur Druckentwesung.

### HINTERGRUND DER ERFINDUNG

Es sind unterschiedliche Verfahren bekannt, um trockene Naturstoffe und Lebensmittel wie Tabak, Getreide, Tee- und Arzneidrogen, Samen, Back- und Suppenmischungen, Tiernahrung, Cerealien, Nüsse oder Gewürze etc. von Schädlingen wie Käfern, Larven, Eiern etc. zu befreien (sog. Entwesung).

Neben weitverbreiteten Verfahren, bei denen Insektizide und Giftgase verwendet werden, gibt es auch Verfahren, bei denen mit Inertgasen, insbesondere mit CO₂ (Kohlendioxid), eine sogenannte Druckentwesung durchgeführt wird. Es gibt Verfahren, bei denen die Entwesung in Beuteln durchgeführt wird (z.B. JP 2016 00 2279A). Dabei diffundiert das in den Beutel eingebrachte Gas von außen in das im Beutel befindliche Füllgut. Ein Verfahren zur Begasung eines Behandlungsraumes ist aus der DE 195 01 783 A1 bekannt.

Dabei wird das zu behandelnde Produkt in eine Druckkammer eingebracht und dort unter Druck einer CO₂-Atmosphäre ausgesetzt. Im Gegensatz zu Giftgasen wie Methylbromid, Phosphin oder Blausäure hinterlässt CO₂ keinerlei giftige Rückstände in den zu behandelnden Produkten und ist darüber hinaus kostengünstig und sehr wirksam

Besonders wirksam ist die CO₂-Behandlung, wenn sie unter hohen Drücken (ca. 30 bis 40bar) in Verbindung mit einer hohen Konzentration in der Behandlungsatmosphäre durchgeführt wird. Schädlinge werden dabei wirksam abgetötet, da bei dieser Behandlung drei, die Organismen schädigende Effekte zusammenkommen: (1) eine Übersäuerung der Körperflüssigkeiten durch die Bildung von Kohlensäure, (2) ein schädlicher Ausgaseffekt (ähnlich der Taucherkrankheit oder dem Aufperlen beim Öffnen einer Sprudelflasche) beim Abbau des Druckes und (3) der Sauerstoffentzug durch Ersatz der Luftatmosphäre durch eine CO₂-Atmosphäre.

Die Behandlung ist jedoch zeitaufwändig bei großen Packeinheiten und bei einer hohen Produktdichte. Hier kann es relativ lange dauern bis die erforderliche CO₂-Konzentration auch im Inneren einer solchen Verpackung (z.B. Tabakballen, Mehlsäcke oder dichte/kompakte Schüttgüter in BigBags) erreicht wird. Zu der eigentlichen letalen Einwirkzeit, die je nach Schädling und aufgebrachtem Druck zwischen wenigen Minuten und mehreren Stunden betragen kann, kommt die erforderliche Zeit hinzu, bis an jedem Ort im Produkt bzw. innerhalb der Verpackung die erforderliche CO₂-Konzentration erreicht wird. Hinzukommt bei großen Gebinden die Gefahr, dass sich unter der Außendruckeinwirkung komprimierte Luftkammern im Produkt bilden können, in denen die Schädlinge nicht wirksam abgetötet werden.

Es besteht also die Aufgabe, die Inertgaszufuhr, bzw. die CO₂-Zufuhr während der Druckentwesung zu verbessern und ein verbessertes Verfahren zur Druckentwesung bereitzustellen, bei dem die obengenannten Nachteile wenigstens teilweise ausgeräumt werden.

### ZUSAMMENFASSUNG DER ERFINDUNG

Ein erster Aspekt der Erfindung betrifft eine Druckentwesungsanordnung mit einer Druckkammer zur Aufnahme wenigstens einer Verpackungseinheit mit einem zu entwesenden Produkt, einer Inertgasversorgung, die unter Druck stehendes Inertgas in die Druckkammer führt und einer Zufuhreinrichtung. Dabei umfasst die Zufuhreinrichtung eine Inertgaszufuhr, die mit einem Inertgasabgabebereich verbunden ist, der im Betrieb innerhalb der Schüttgutverpackungseinheit und des darin befindlichen Produktes platzierbar ist und so durch wenigstens eine Abgabeöffnung über die Inertgaszufuhr zugeführtes Inertgas dem Produkt direkt zuführbar ist, wodurch die Inertgaskonzentration innerhalb der Schüttgutverpackung erhöhbar ist bzw. die Erhöhung der Inertgaskonzentration beschleunigt werden kann.

Ein weiterer Aspekt der Erfindung betrifft ein Verfahren zur Druckentwesung, bei dem eine erfindungsgemäße Zufuhreinrichtung verwendet wird.

Weitere Aspekte und Merkmale der vorliegenden Erfindung ergeben sich aus den abhängigen Ansprüchen, der beigefügten Zeichnung und der nachfolgenden Beschreibung bevorzugter Ausführungsformen.

### KURZBESCHREIBUNG DER ZEICHNUNG

Ausführungsformen der Erfindung werden nun beispielhaft und unter Bezugnahme auf die beigefügte Zeichnung beschrieben, dabei zeigt:
- Fig. 1: eine schematische Seitenansicht eines ersten Ausführungsbeispiels einer Zufuhreinrichtung für eine erfindungsgemäße Druckentwesungsanordnung;
- Fig. 2: eine schematische Seitenansicht eines zweiten Ausführungsbeispiels einer Zufuhreinrichtung;
- Fig. 3: eine schematische Darstellung einer erfindungsgemäßen Druckentwesungsanordnung zur Durchführung eines Druckentwesungsverfahrens, bei dem die Zufuhreinrichtung einsetzbar ist;
- Fig. 4: einen schematischen Ablauf eines Verfahrens zur Druckentwesung, bei dem Inertgas über die Zufuhreinrichtung zugeführt wird und
- Fig. 5: einen schematischen Ablauf eines Verfahrens zur Druckentwesung, bei dem die Verpackungseinheit über die Zufuhreinrichtung evakuiert wird.

### BESCHREIBUNG VON AUSFÜHRUNGSFORMEN

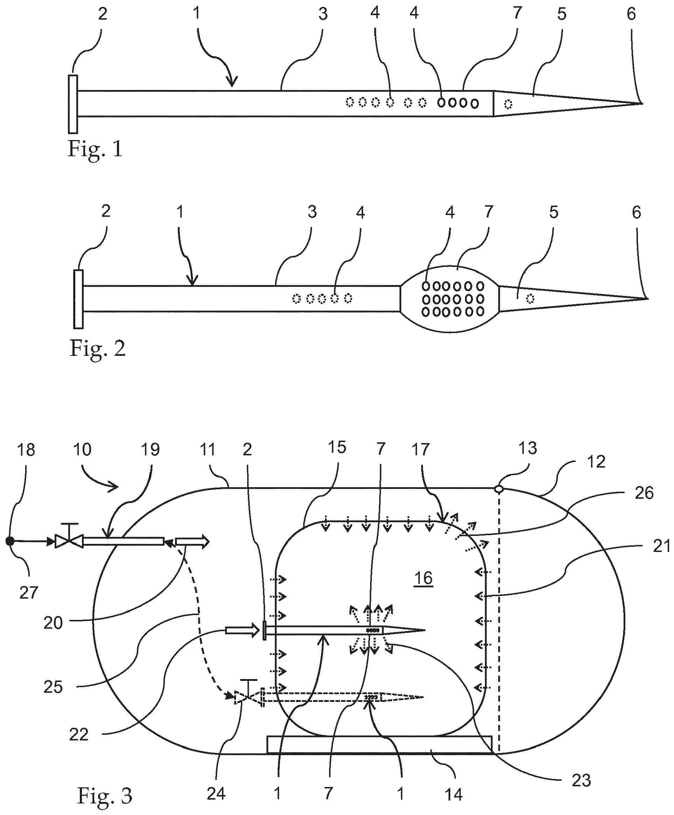

In Fig. 1 ist eine Ausführungsform in Übereinstimmung mit der vorliegenden Erfindung veranschaulicht. Vor einer detaillierten Beschreibung folgen zunächst allgemeine Erläuterungen zu den Ausführungsformen.

Die Zufuhreinrichtung zeichnet sich dadurch aus, dass sie einen Inertgasabgabebereich aufweist, der im Betrieb innerhalb der Schüttgutverpackungseinheit und damit innerhalb des darin befindlichen Produktes platzierbar ist. Dieser Inertgasabgabebereich ist mit einer Inertgaszufuhr verbunden, über die Inertgas wie CO₂, in die Zufuhreinrichtung gelangt und durch wenigstens eine der Abgabeöffnungen in das Innere der Verpackung gelangt und so von Innen die Inertgaskonzentration im Produkt erhöht. Das zur Behandlung erforderliche Inertgas gelangt also nicht nur von außen durch die gasdurchlässige Verpackung und durch die außen liegenden Produktschichten in die inneren Bereiche der Verpackung und damit auch zu innenliegenden Produktbereichen, sondern zugleich unmittelbar durch die Zufuhreinrichtung direkt ins Innere. Dadurch wird zum einen die Inertgaszufuhr erheblich erhöht, und zum anderen wird die Erhöhung der Inertgaskonzentration im Inneren der Verpackung bzw. des Ladegutes beschleunigt. Auf diese Weise ist es möglich, die Behandlungszyklen im Vergleich zum herkömmlichen Verfahren, bei dem die erfindungsgemäße Zufuhreinrichtung nicht verwendet wird, erheblich zu verkürzen.

In einer anderen Ausführungsform ist die Zufuhreinrichtung als rohrartige Sonde ausgebildet, mit einem ersten Ende, an dem die Inertgaszufuhr ausgebildet ist und einem zweiten Ende, das mit einer Einführungsspitze versehen ist, die so ausgebildet ist, dass die Sonde durch einen Verpackungswerkstoff in das Produkt einführbar ist. Eine schlanke, rohrartige Sonde mit einer Einführungsspitze ist besonders geeignet die Zufuhreinrichtung sehr einfach in eine Verpackung einzuführen und nach der Behandlung auch wieder zu entfernen. Bei so einer Sonde gelangen dann die Abgabeöffnungen in den Produktbereich, also ins Innere der Verpackung, während die Inertgaszufuhr außerhalb der Verpackung verbleibt, so dass Inertgas in der Druckkammer durch die Rohrsonde über die Inertgaszufuhr ins Innere der Sonde gerät und durch die Abgabeöffnung(en) bzw. den Inertgasabgabebereich in das Innere der Verpackung.

Dabei gibt es Ausführungen bei denen eine oder mehrere Abgabeöffnungen im Bereich der Einführungsspitze und/oder in einem Rohrabschnitt zwischen dem ersten und zweiten Ende angeordnet sind. Auf diese Weise kann die gesamte Länge der Zufuhreinrichtung genutzt werden, um Inertgas in das Produkt abzugeben.

Es gibt Ausführungen, bei denen die Inertgaszufuhr an der Inertgaszufuhreinrichtung auch direkt über einen absperrbaren Druckanschluss mit einer Inertgasversorgung koppelbar ist. Auf diese Weise ist es bspw. möglich, die Inertgasbeaufschlagung der Druckkammer durch die Zufuhreinrichtung (die Rohrsonde) durchzuführen. Dabei erfolgt eine Spülung aus dem Inneren der Verpackung, bei dem das dort austretende Inertgas (CO₂) den Luftsauerstoff von Innen aus der Verpackung verdrängt und nach Außen drückt, so dass bereits mit vollständigem Druckaufbau in der Druckkammer auch eine vollständige Sättigung in der gewünschten Inertgas-Konzentration im Produkt vorhanden ist.

In einer anderen Ausführung ist vorgesehen, dass die Einführungsspitze mit einem stumpfen Ende versehen ist, so dass die Rohrsonde beim Durchdringen eines textilen Werkstoffs diesen nicht beschädigt. Diese Ausführung ist bspw. dann vorteilhaft, wenn das Produkt in Gewebe-BigBags oder Säcken abgepackt ist, bei denen dann die Einführungsspitze das Gewebe nur auseinanderschiebt und beim Einführen nicht zerschneidet. Eine so aufgedehnte Öffnung verschließt sich beim Herausziehen der Zufuhreinrichtung auch wieder vollständig. So wird verhindert, dass nach Entfernung der Sonde Produkt aus der Verpackung austritt.

Bei einer anderen Ausführung ist vorgesehen, dass am zweiten Ende ein Bereich ausgebildet ist, der einen größeren Durchmesser aufweist als der Rohrabschnitt zwischen dem ersten und zweiten Ende und in diesem Bereich mehrere Abgabeöffnungen ausgebildet sind. Durch eine Durchmesservergrößerung und die damit erreichte Flächenvergrößerung kann die Anzahl der Austrittsöffnungen und damit auch die Austrittsoberfläche vergrößert werden. Auf diese Weise kann der Inertgaseintrag in das Produkt bzw. in die Verpackung weiter erhöht werden.

Es gibt Ausführungen bei denen der Inertgasabgabebereich mit den Abgabeöffnungen im Innern der Verpackung auch über eine flexible Leitung (z.B. ein Schlauch) mit der Inertgaszufuhr verbunden bzw. koppelbar ist.

Die Erfindung betrifft eine Druckentwesungsanordnung mit:
- einer Druckkammer zur Aufnahme wenigstens einer Verpackungseinheit mit einem zu entwesenden Produkt,
- einer Inertgasversorgung, die unter Druck stehendes Inertgas in die Druckkammer führt und
- einer erfindungsgemäßen Zufuhreinrichtung, die mit ihrem ersten Ende und dem Inertgasabgabebereich innerhalb der Verpackungseinheit angeordnet ist und mit ihrem zweiten Ende und der Inertgaszufuhr außerhalb der Verpackungseinheit, aber im Inneren der Druckkammer angeordnet ist.

Bei dieser Ausführung gelangt beim Unterdrucksetzen der Druckkammer mit Inertgas dieses gleichzeitig wie oben bereits skizziert durch die Inertgaszufuhr in die Zufuhreinrichtung und über den Inertgasabgabebereich direkt in das zu entwesende Produkt. Bei dieser Ausführung ist der apparative und steuertechnische Aufwand besonders gering.

In einer anderen Ausführung ist die Inertgaszufuhr über eine Koppeleinrichtung (z.B. eine feste oder flexible Leitung) direkt mit der Inertgasversorgung verbunden. Bei dieser Ausführung kann das

Inertgas direkt aus der Inertgasversorgung in das Produkt geführt werden. Dabei kann entweder, wie bereits oben angedeutet, die Inertgaszufuhr ausschließlich über die Zufuhreinrichtung erfolgen, oder es ist möglich, die Druckkammer über die Inertgasversorgung unter Druck zu setzen und zusätzlich auch direkt über die Inertgasversorgung Inertgas in die Zufuhreinrichtung (die Rohrsonde) zu speisen.

Ein Verfahren zur Druckentwesung mittels eines Inertgases, insbesondere CO₂, umfasst folgende Schritte:
- Bereitstellen einer Druckentwesungsanordnung,
- Beschicken der Druckkammer mit wenigstens einer Verpackungseinheit mit einem zu entwesenden Produkt,
- Verschließen der Druckkammer,
- Beaufschlagen der Druckkammer mit einem Inertgas (CO₂),
- Zuführen von Inertgas über die Zufuhreinrichtung in die Verpackungseinheit,
- Druckaufbau und Erhöhen der Inertgaskonzentration im Inneren der Verpackungseinheit,
- Halten des aufgebauten Drucks und der Inertgaskonzentration (in der Druckkammer und im zu entwesenden Produkt),
- Abführen des Inertgases und Druckabbau in der Druckkammer,
- Öffnen der Druckkammer,
- Entnahme der Verpackungseinheit mit dem entwesten Produkt.

Auch hier gibt es zwei wesentliche Verfahrensvariationen, nämlich die eine, bei der das Inertgas direkt aus der Druckkammer über die Inertgaszufuhr der Zufuhreinrichtung in den Inertgasabgabebereich strömt und so in die Verpackung bzw. in das in der Verpackung befindliche Produkt gelangt, und die andere, bei der das Inertgas direkt aus der Inertgasversorgung durch die Inertgaszufuhr in die Zufuhreinrichtung und in deren Inertgasabgabebereich und damit wiederum in die Verpackung und das zu behandelnde Produkt strömt.

In anderen Ausführungen können diese Verfahren auch kombiniert werden. Es können bspw. mehrere Zufuhreinrichtungen vorgesehen werden, von denen einige aus der Druckkammer selbst gespeist werden und andere direkt aus der Inertgasversorgung.

Ein anderes Verfahren zur Druckentwesung, bei dem der Verpackung bzw. dem Produkt zuerst Restgas entzogen und erst danach die CO₂-Behandlung durchgeführt wird, umfasst folgende Schritte:
- Bereitstellen einer Druckentwesungsanordnung,
- Beschicken der Druckkammer mit wenigstens einer Verpackungseinheit mit einem zu entwesenden Produkt,
- Verschließen der Druckkammer,
- Anlegen eines Unterdrucks an der Inertgaszufuhr der Zufuhreinrichtung,
- Abführen von Restgas über die Zufuhreinrichtung aus der Verpackungseinheit, wobei das Restgas direkt aus der Verpackungseinheit durch den Inertgasabgabebereich und die Inertgaszufuhr aus der Zufuhreinrichtung strömt,
- Beaufschlagen der Druckkammer mit einem Inertgas, insbesondere CO₂,
- Zuführen von Inertgas über die Zufuhreinrichtung in die Verpackungseinheit,
- Druckaufbau und Erhöhen der Inertgaskonzentration im Innern der Verpackungseinheit
- Halten des aufgebauten Druckes und der Inertgaskonzentration
- Abführen des Inertgases und Druckabbau
- Öffnen der Druckkammer
- Entnahme der Verpackungseinheit mit dem entwesten Produkt.

Dabei kann der Unterdruck an der Inertgaszufuhr durch Evakuieren der Druckkammer aufgebaut werden oder direkt an der Inertgaszufuhr über eine mit einer Evakuiereinrichtung verbundene Druckleitung.

Dabei sind auch verschiedenste Verfahrensabläufe möglich, um die erforderlichen Begasungszeiten und den Gasverbrauch zu minimieren.

Zurückkehrend zur Figur 1 veranschaulicht diese eine erste Ausführungsform einer erfindungsgemäßen Zufuhreinrichtung, die als Rohrsonde 1 ausgebildet ist. Die Zufuhreinrichtung 1 weist an einem ersten Ende eine Inertgaszufuhr 2 auf, die über einen Rohrabschnitt 3 mit einer oder mehreren Öffnungen 4 verbunden ist und am zweiten Ende in einer Einführungsspitze 5 endet. Die Einführungsspitze 5 weist an ihrem Ende entweder ein spitzes, scharfes oder auch ein stumpfes Ende 6 auf. Die Abgabeöffnungen 4 sind vorzugsweise in einem Inertgasabgabebereich 7 angeordnet.

Es gibt aber auch Ausführungen, bei denen die Abgabeöffnungen 4 über den gesamten Rohrabschnitt 3 verteilt sind (gestrichelt dargestellt).

Figur 2 zeigt ein zweites Ausführungsbeispiel einer erfindungsgemäßen Zufuhreinrichtung 1, bei der der Inertgasabgabebereich 7 einen größeren Durchmesser aufweist, also verdickt ausgeführt ist, als der Rohrabschnitt 3. In diesem Inertgasabgabebereich 7 sind mehr Abgabeöffnungen 4 angeordnet, so dass der Gesamtquerschnitt der für die Abgabe von Inertgas zur Verfügung steht erhöht wird und so die Abgabemenge auch erhöht werden kann. Der Druckaufbau kann beschleunigt werden und die Inertgaskonzentration wird im Produkt 16 (Fig. 3) schneller erhöht.

Die Kontur eines solchen verdickten Inertgasabgabebereichs 7 sollte möglichst glatt in den Rohrabschnitt 3 übergehen sowie auch in den Bereich der Einführungsspitze 5, so dass auch der verdickte Bereich ohne größeren Widerstand durch einen Verpackungswerkstoff geführt werden kann.

Figur 3 zeigt eine Druckentwesungsanordnung 10, die eine Druckkammer 11 umfasst, die an einem Ende zur Beschickung einen Verschluss 12 (z. B. ein aufklappbarer Behälterboden) aufweist, der über ein Scharnier 13 mit der Druckkammer 11 verbunden ist.

Im Inneren der Druckkammer 11 ist eine Palette 14 mit einer Verpackungseinheit 15 dargestellt, die bspw. als BigBag ausgebildet ist. In der Verpackungseinheit 15 ist das zu behandelnde (entwesende) Produkt 16 angeordnet. Eine Rohrsonde gemäß Fig. 1 oder 2 ist durch die Verpackungshülle 17 in die Verpackungseinheit 15 hineingesteckt und ragt mit ihrem zweiten Ende, und dem Inertgasabgabebereich 7 in die Verpackungseinheit 15 hinein. Die Inertgaszufuhr 2 am ersten Ende liegt außerhalb der Verpackungseinheit 15.

Der Begasungs- bzw. Entwesungsprozess läuft nun folgendermaßen ab. Bei verschlossener Drucckammer 11 wird über eine Inertgasversorgung 18 z.B. CO₂-Gas über einen Zufuhrstutzen 19 ins Innere der Druckkammer 11 geführt. Das dort austretende Inertgas (Pfeil 20) verdrängt die dort vorhandene Atmosphäre und baut einen Druck von bis zu 30bar auf. Dies bewirkt zwei Effekte. Zum einen diffundiert das unter Druck stehende Gas in der Druckkammer 11 durch die Verpackungshülle 17 ins Innere der Verpackungseinheit 15 und durchsetzt das dort vorhandene Produkt mit Inertgas (CO₂). Diese Wirkung ist durch die kurzen Pfeile 21 angedeutet.

Zum anderen strömt Inertgas (CO₂) durch die Inertgaszufuhr 2 in der Rohrsonde 1 direkt ins Innere der Verpackungseinheit 15 (Pfeil 22: eintretendes Inertgas) und gelangt durch die Abgabeöffnungen 4 im Inertgasabgabebereich 7 direkt (angedeutet durch die Pfeile 23) in das Produkt 16. Bei dieser Ausführung wird also die Verpackungseinheit 15 aus dem Inneren der Druckkammer 11 mit Inertgas versorgt, indem eine kommunizierende Verbindung über die Zufuhreinrichtung 1 (Rohrsonde) zwischen dem Innenraum der Druckkammer 11 und dem Inneren der Verpackungseinheit 15 gebildet wird.

Eine alternative Ausführung ist gestrichelt dargestellt. Bei dieser Ausführung ist die Rohrsonde 1 über einen absperrbaren Druckanschluss 24 (gegebenenfalls fernsteuerbar) und eine Druckleitung 25 mit dem Zufuhrstutzen 19 und damit mit der Inertgasversorgung 18 verbunden. Das Inertgas strömt also direkt aus der Inertgasversorgung 18 in die Rohrsonde 1 und über die Zufuhröffnungen 4 direkt ins Innere der Verpackungseinheit 15 und das Produkt 16. Im Extremfall kann so auch die gesamte Druckkammer 11 mit Inertgas beaufschlagt werden. Das Inertgas tritt dann aus dem Inneren der Verpackungseinheit 15 durch die Verpackungshülle 17 nach Außen ins Innere der Drucckammer 11 (angedeutet durch die Pfeile 26).

In einer anderen Ausführung kann aber auch gleichzeitig über die Druckleitung 25 Inertgas ins Produkt 16 geführt werden und über den Zufuhrstutzen 19 die Druckkammer mit CO₂ beaufschlagt werden.

Es ist auch möglich, mehrere Sonden 1 in einer Verpackungseinheit 15 zu platzieren. Davon können einige über eine oder mehrere Druckleitungen 25 versorgt werden, während andere aus dem Innenraum der Druckkammer 11 gespeist werden.

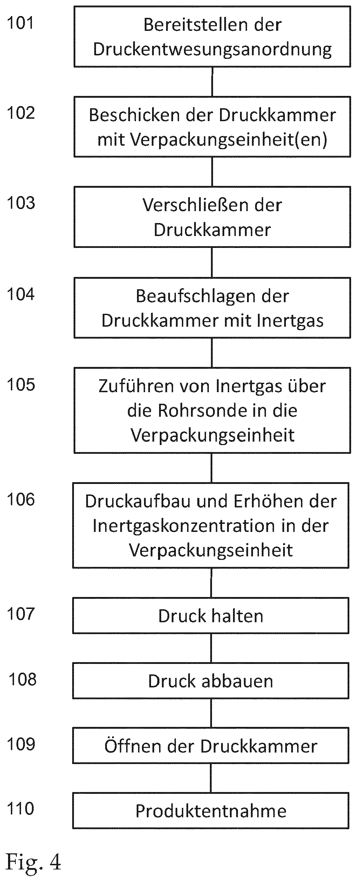

Figur 4 zeigt einen typischen Verfahrensablauf, bei dem folgende Schritte ausgeführt werden:
- 101: Bereitstellen einer Druckentwesungsanordnung 10,
- 102: Beschicken der Druckkammer 11 mit wenigstens einer Verpackungseinheit 15 mit einem zu entwesenden Produkt 16,
- 103: Verschließen der Druckkammer 11,
- 104: Beaufschlagen der Druckkammer 11 mit einem Inertgas, insbesondere CO₂,
- 105: Zuführen von Inertgas über die Zufuhreinrichtung 1 in die Verpackungseinheit 15,
- 106: Druckaufbau und Erhöhen der Inertgaskonzentration im Inneren der Verpackungseinheit 15,
- 107: Halten des aufgebauten Drucks und der Inertgaskonzentration,
- 108: Abführen des Inertgases und Druckabbau in der Druckkammer 11,
- 109: Öffnen der Druckkammer 11,
- 110: Entnahme der Verpackungseinheit 15 mit dem entwesten Produkt 16.

Die Verfahrensschritte 104 bis 106 können in beliebiger Reihenfolge durchgeführt werden. Der verfahrensschritt 107 ist optional.

Auch hier kann das Verfahren so durchgeführt werden, dass die Zufuhreinrichtung 1 aus der Drucckammer 11 gespeist wird oder über die Druckleitung 25 aus der Inertgasversorgung 18.

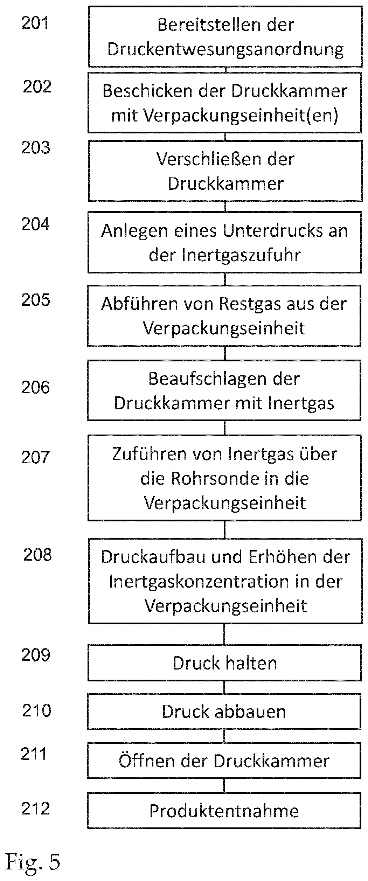

In einer Abwandlung des o.g. Verfahrens wird die Verpackungseinheit 15 vor der Inertgaszufuhr (wenigstens teilweise) evakuiert. Dadurch kann die anschließende Inertgaszufuhr verbessert werden, da kein Restgas verdrängt werden muss. Es kann so auch verhindert werden, dass sich Restgasblasen bilden, in denen Schädlinge überleben können. Figur 5 zeigt dazu einen typischen Verfahrensablauf, bei dem die folgenden Schritte durchgeführt werden:
- 201: Bereitstellen einer Druckentwesungsanordnung 10,
- 202: Beschicken der Druckkammer 11 mit wenigstens einer Verpackungseinheit 15 mit einem zu entwesenden Produkt 16,
- 203: Verschließen der Druckkammer 11,
- 204: Anlegen eines Unterdrucks an der Inertgaszufuhr 2 der Zufuhreinrichtung 1,
- 205: Abführen von Restgas über die Zufuhreinrichtung 1 aus der Verpackungseinheit 15, wobei das Restgas direkt aus der Verpackungseinheit 15 durch den Inertgasabgabebereich 7 und die Inertgaszufuhr 2 aus der Zufuhreinrichtung 1 strömt,
- 206: Beaufschlagen der Druckkammer (11) mit einem Inertgas, insbesondere CO₂,
- 207: Zuführen von Inertgas über die Zufuhreinrichtung 1 in die Verpackungseinheit 15,
- 208: Druckaufbau und Erhöhen der Inertgaskonzentration im Innern der Verpackungseinheit 15
- 209: Halten des aufgebauten Druckes und der Inertgaskonzentration
- 210: Abführen des Inertgases und Druckabbau
- 211: Öffnen der Druckkammer 11
- 212: Entnahme der Verpackungseinheit 16 mit dem entwesten Produkt 16.

Der Unterdruck in der Verpackungseinheit 15 kann dabei entweder durch Evakuieren der Drucckammer 11 erfolgen - es entsteht eine Druckdifferenz zwischen Druckkammer 11 und Verpackungseinheit 15, die dazu führt das Restgas aus der Verpackungseinheit 15 durch die CO₂ Rohrsonde 1 in die Druckkammer strömt - oder über eine mit der Rohrsonde 1 verbundene Druckleitung 25, die mit einer externen Evakuiereinrichtung (z.B. Vakuumpumpe, evakuierter Behälter) verbunden ist, die das Restgas direkt über die Öffnungen 4 und den Anschluss (Inertgaszufuhr 2) der Rohrsonde 1 absaugt.

Absaugen von Restgas und CO₂ Zufuhr kann auch gleichzeitig über unterschiedliche Rohrsonden 1 erfolgen. Über eine oder mehrere Rohrsonden 1 wird Restgas abgesaugt und über eine oder mehrere andere Rohrsonden 1 wird CO₂ zugeführt.

Weitere Variationen und Ausführungen ergeben sich für den Fachmann im Rahmen der Ansprüche.

### Bezugszeichenliste

- 1: Zufuhreinrichtung (Rohrsonde)
- 2: Inertgaszufuhr (erstes Ende)
- 3: Rohrabschnitt
- 4: Öffnungen
- 5: Einführungsspitze (zweites Ende)
- 6: Ende
- 7: Inertgasabgabebereich
- 10: Druckentwesungsanordnung
- 11: Druckkammer
- 12: Öffnung
- 13: Scharnier
- 14: Palette
- 15: Verpackungs einheit
- 16: Produkt
- 17: Verpackungshülle
- 18: Inertgasversorgung
- 19: Zufuhrstutzen
- 20: austretendes Inertgas
- 21: kurze Pfeile (eindiffundierendes Inertgas)
- 22: eintretendes Inertgas
- 23: eingeführtes Inertgas
- 24: absperrbarer Druckanschluss
- 25: Druckleitung
- 26: ausdiffundierendes Inertgas
- 27: Evakuiereinrichtung
- 101 - 110: Verfahrensschritte

## Patentansprüche

1. Druckentwesungsanordnung (10) mit einer Druckkammer (11) zur Aufnahme wenigstens einer Verpackungseinheit (15) mit einem zu entwesenden Produkt (16),
einer Inertgasversorgung (18) die unter Druck stehendes Inertgas in die Druckkammer (11) führt, und einer Zufuhreinrichtung (1) zur Erhöhung einer Inertgaskonzentration in einem in der Verpackungseinheit (15) befindlichen Produkt (16) während einer Druckentwesung in der Druckkammer (11), wobei die Zufuhreinrichtung (1) eine Inertgaszufuhr (2) umfasst, die mit einem Inertgasabgabebereich (7) verbunden ist, der im Betrieb innerhalb der Verpackungseinheit (15) und innerhalb des darin befindlichen Produktes (16) platziert wird und so durch wenigstens eine Abgabeöffnung (4) über die Inertgaszufuhr (2) zugeführtes Inertgas dem Produkt (16) direkt zuführt und so die Inertgaskonzentration innerhalb der Verpackungseinheit (15) erhöht und/oder eine Erhöhung der Inertgaskonzentration beschleunigt.

2. Druckentwesungsanordnung (10) nach Anspruch 1, wobei die Zufuhreinrichtung (1) als rohrartige Sonde ausgebildet ist, mit einem ersten Ende, an dem die Inertgaszufuhr (2) ausgebildet ist, und einem zweiten Ende, das mit einer Einführungsspitze (5) versehen ist, die so ausgebildet ist, dass die Sonde (1) durch einen Verpackungswerkstoff (17) in das Produkt (16) einführbar ist.

3. Druckentwesungsanordnung (10) nach Anspruch 1 oder 2, wobei ein oder mehrere Abgabeöffnungen (4) im Inertgasabgabebereich (7), im Bereich der Einführungsspitze (5) und/oder in einem Rohrabschnitt (3) zwischen dem ersten und zweiten Ende angeordnet sind.

4. Druckentwesungsanordnung (10) nach einem der Ansprüche 1 bis 3, wobei die Inertgaszufuhr (2) über einen absperrbaren Druckanschluss (24,) mit einer Inertgasversorgung (18) koppelbar ist.

5. Druckentwesungsanordnung (10) nach einem der Ansprüche 2 bis 4, wobei die Einführungsspitze (5) mit einem stumpfen Ende (6) versehen ist, so dass die Sonde (1) beim Durchdringen eines textilen Verpackungswerkstoffes (17) diesen nicht beschädigt.

6. Druckentwesungsanordnung (10) nach einem der Ansprüche 1 bis 5, wobei der Inertgasabgabebereich (7) einen größeren Durchmesser aufweist als der Rohrabschnitt (3) zwischen dem ersten und zweiten Ende und in dem Inertgasabgabebereich (7) mehrere Abgabeöffnungen (4) ausgebildet sind.

7. Druckentwesungsanordnung (10) nach einem der Ansprüche 2 bis 6, wobei die Zufuhreinrichtung (1) mit ihrem zweiten Ende (5) und dem Inertgasabgabebereich (7) innerhalb der Verpackungseinheit (15) angeordnet ist und mit ihrem ersten Ende und der Inertgaszufuhr (2) außerhalb der Verpackungseinheit (15) im Innern der Druckkammer (11) angeordnet ist oder über eine Koppeleinrichtung (25, 19) mit der Inertgasversorgung (18) verbunden ist.

8. Verfahren zur Druckentwesung mittels eines Inertgases, insbesondere CO₂, mit:
(101) Bereitstellen einer Druckentwesungsanordnung (10) nach Anspruch 7
(102) Beschicken der Druckkammer (11) mit wenigstens einer Verpackungseinheit (15) mit einem zu entwesenden Produkt (16)
(103) Verschließen der Druckkammer (11)
(104) Beaufschlagen der Druckkammer (11) mit einem Inertgas, insbesondere CO₂
(105) Zuführen von Inertgas über die Zufuhreinrichtung (1) in die Verpackungseinheit (15) und in das darin befindliche Produkt (16)
(106) Druckaufbau und Erhöhen der Inertgaskonzentration im Innern der Verpackungseinheit (15) und innerhalb des darin befindlichen Produktes (16)
(107) Halten des aufgebauten Druckes und der Inertgaskonzentration
(108) Abführen des Inertgases und Druckabbau
(109) Öffnen der Druckkammer (11)
(110) Entnahme der Verpackungseinheit (15) mit dem entwesten Produkt (16).

9. Verfahren nach Anspruch 8, wobei beim Zuführen des Inertgases dieses aus der Druckkammer (11) über die Inertgaszufuhr (2) der Zufuhreinrichtung (1) in den Inertgasabgabebereich (7) gelangt.

10. Verfahren nach Anspruch 8 oder 9 wobei beim Zuführen des Inertgases dieses direkt aus der Inertgasversorgung (18) über eine Druckleitung (25) durch die Inertgaszufuhr (2) der Zufuhreinrichtung (1) in den Inertgasabgabebereich (7) strömt.

11. Verfahren zur Druckentwesung mittels eines Inertgases, insbesondere CO₂, mit:
(201) Bereitstellen einer Druckentwesungsanordnung (10) nach Anspruch 7
(202) Beschicken der Druckkammer (11) mit wenigstens einer Verpackungseinheit (15) mit einem zu entwesenden Produkt (16)
(203) Verschließen der Druckkammer (11)
(204) Anlegen eines Unterdrucks an der Inertgaszufuhr (2) der Zufuhreinrichtung
(205) Abführen von Restgas über die Zufuhreinrichtung (1) aus der Verpackungseinheit (15), wobei das Restgas direkt aus der Verpackungseinheit (15) durch den Inertgasabgabebereich (7) und die Inertgaszufuhr (2) aus der Zufuhreinrichtung (1) strömt
(206) Beaufschlagen der Druckkammer (11) mit einem Inertgas, insbesondere CO₂
(207) Druckaufbau und Erhöhen der Inertgaskonzentration im Innern der Verpackungseinheit (15) und innerhalb des darin befindlichen Produktes (16)
(208) Halten des aufgebauten Druckes und der Inertgaskonzentration
(209) Abführen des Inertgases und Druckabbau
(210) Öffnen der Druckkammer (11)
(211) Entnahme der Verpackungseinheit (15) mit dem entwesten Produkt (16).

12. Verfahren nach Anspruch 11, wobei der Unterdruck an der Inertgaszufuhr (2) durch evakuieren der Druckkammer (11) aufgebaut wird.

13. Verfahren nach Anspruch 11, wobei der Unterdruck an der Inertgaszufuhr (2) über eine mit einer Evakuiereinrichtung (27) verbundene Druckleitung (25) aufgebaut wird.

## Claims

1. A pressure disinfestation assembly (10), comprising a pressure chamber (11) for receiving at least one packaging unit (15) with a product (16) to be disinfested, an inert gas supply (18), which feeds pressurized inert gas into the pressure chamber (11), and a supply device (1) for increasing an inert gas concentration in a product (16) located in the packaging unit (15) during a pressure disinfestation in the pressure chamber (11), wherein the supply device (1) comprises an inert gas supply (2), which is connected to an inert gas discharge region (7), which in operation is placed inside the packaging unit (15) and inside the product (16) located therein and thus directly supplies inert gas supplied through at least one discharge opening (4) via the inert gas supply (2) to the product (16) so as to increase the inert gas concentration within the packaging unit (15) and/or accelerates an increase in the inert gas concentration.

2. The pressure disinfestation assembly (10) according to claim 1, wherein the supply device (1) is designed as a tubular probe having a first end at which the inert gas supply (2) is formed and a second end which is provided with an insertion tip (5) designed in such a way that the probe (1) can be inserted into the product (16) through a packaging material (17).

3. The pressure disinfestation assembly (10) according to claim 1 or 2, wherein one or more discharge openings (4) are arranged in the inert gas discharge region (7), in the region of the insertion tip (5) and/or in a tube portion (3) between the first and second end.

4. The pressure disinfestation assembly (10) according to any of claims 1 to 3, wherein the inert gas supply (2) can be coupled to an inert gas supply (18) via a lockable pressure connection (24).

5. Pressure disinfestation assembly (10) according to any of claims 2 to 4, wherein the insertion tip (5) is provided with a blunt end (6) so that the probe (1) does not damage a textile packaging material (17) when penetrating it.

6. The pressure disinfestation assembly (10) according to any of claims 1 to 5, wherein the inert gas discharge region (7) has a larger diameter than the tube portion (3) between the first and second end and a plurality of discharge openings (4) are formed in the inert gas discharge region (7).

7. The pressure disinfestation assembly (10) according to any of claims 2 to 6, wherein the supply device (1) is arranged with its second end (5) and the inert gas discharge region (7) inside the packaging unit (15) and is arranged with its first end and the inert gas supply (2) outside the packaging unit (15) inside the pressure chamber (11) or is connected via a coupling device (25, 19) to the inert gas supply (18).

8. A method for the pressure disinfestation by means of an inert gas, in particular CO₂, comprising:
(101) providing a pressure disinfestation assembly (10) according to claim 7
(102) feeding the pressure chamber (11) with at least one packaging unit (15) with a product (16) to be disinfested
(103) closing the pressure chamber (11)
(104) applying an inert gas, in particular CO₂, to the pressure chamber (11)
(105) supplying inert gas via the supply device (1) into the packaging unit (15) and into the product (16) located therein
(106) pressurizing and increasing the inert gas concentration inside the packaging unit (15) and inside the product (16) located therein
(107) maintaining the built-up pressure and the inert gas concentration
(108) removing the inert gas and reducing the pressure
(109) opening the pressure chamber (11)
(110) removing the packaging unit (15) with the disinfested product (16).

9. The method according to claim 8, wherein, when the inert gas is supplied, it passes from the pressure chamber (11) via the inert gas supply (2) of the supply device (1) into the inert gas discharge region (7).

10. The method according to claim 8 or 9, wherein, when the inert gas is supplied, the latter flows directly from the inert gas supply (18) via a pressure line (25) through the inert gas supply (2) of the supply device (1) into the inert gas discharge region (7).

11. The method for the pressure disinfestation by means of an inert gas, in particular CO₂, comprising
(201) providing a pressure disinfestation assembly (10) according to claim 7
(202) feeding the pressure chamber (11) with at least one packaging unit (15) with a product (16) to be disinfested
(203) closing the pressure chamber (11)
(204) applying a negative pressure to the inert gas supply (2) of the supply device
(205) removing residual gas via the supply device (1) from the packaging unit (15), wherein the residual gas flows directly from the packaging unit (15) through the inert gas discharge region (7) and the inert gas supply (2) from the supply device (1)
(206) applying an inert gas, in particular CO₂, to the pressure chamber (11)
(207) pressurizing and increasing the inert gas concentration inside the packaging unit (15) and inside the product (16) located therein
(208) maintaining the built-up pressure and the inert gas concentration
(209) removing the inert gas and reducing the pressure
(210) opening the pressure chamber (11)
(211) removing the packaging unit (15) with the disinfested product (16).

12. The method according to claim 11, wherein the negative pressure is built up at the inert gas supply (2) by evacuating the pressure chamber (11).

13. The method according to claim 11, wherein the negative pressure is built up at the inert gas supply (2) via a pressure line (25) connected to an evacuation device (27).

## Revendications

1. Dispositif de désinfestation sous pression (10) comprenant une chambre de pression (11) pour recevoir au moins une unité d'emballage (15) avec un produit (16) à désinfester,
une alimentation en gaz inerte (18) qui alimente en gaz inerte sous pression la chambre de pression (11), et un dispositif d'alimentation (1) pour augmenter une concentration en gaz inerte dans un produit (16) contenu dans l'unité d'emballage (15) pendant une désinfestation sous pression dans la chambre de pression (11), dans lequel le dispositif d'alimentation (1) comprend une arrivée de gaz inerte (2) qui est reliée à une zone de distribution de gaz inerte (7) laquelle, lors du fonctionnement, est placée à l'intérieur de l'unité d'emballage (15) et à l'intérieur du produit (16) y contenu de sorte à alimenter par au moins un orifice de distribution (4) directement le produit (16) en gaz inerte fourni à travers l'arrivée en gaz inerte (2) et à augmenter ainsi la concentration en gaz inerte à l'intérieur de l'unité d'emballage (15) et/ou à accélérer une augmentation de la concentration en gaz inerte.

2. Dispositif de désinfestation sous pression (10) selon la revendication 1, dans lequel le dispositif d'alimentation (1) est configuré sous la forme d'une sonde tubulaire présentant une première extrémité à laquelle est formée l'arrivée de gaz inerte (2) et une deuxième extrémité munie d'une pointe d'insertion (5) laquelle est conçue de telle sorte que la sonde (1) peut être insérée dans le produit (16) à travers un matériau d'emballage (17).

3. Dispositif de désinfestation sous pression (10) selon la revendication 1 ou 2, dans lequel un ou plusieurs orifices de distribution (4) sont disposés dans la zone de distribution de gaz inerte (7), dans la zone de la pointe d'insertion (5) et/ou dans une section tubulaire (3) entre les première et deuxième extrémités.

4. Dispositif de désinfestation sous pression (10) selon l'une des revendications 1 à 3, dans lequel l'arrivée de gaz inerte (2) peut être couplée à une alimentation en gaz inerte (18) par l'intermédiaire d'un raccord de pression (24) obturable.

5. Dispositif de désinfestation sous pression (10) selon l'une des revendications 2 à 4, dans lequel la pointe d'insertion (5) est munie d'une extrémité émoussée (6) de sorte que la sonde (1) n'endommage pas un matériau d'emballage textile (17) lorsqu'elle le traverse.

6. Dispositif de désinfestation sous pression (10) selon l'une des revendications 1 à 5, dans lequel la zone de distribution de gaz inerte (7) a un diamètre supérieur à celui de la section tubulaire (3) entre les première et deuxième extrémités, et dans lequel une pluralité d'orifices de distribution (4) sont formés dans la zone de distribution de gaz inerte (7).

7. Dispositif de désinfestation sous pression (10) selon l'une des revendications 2 à 6, dans lequel le dispositif d'alimentation (1) est disposé avec sa deuxième extrémité (5) et la zone de distribution de gaz inerte (7) à l'intérieur de l'unité d'emballage (15) et avec sa première extrémité et l'arrivée de gaz inerte (2) à l'extérieur de l'unité d'emballage (15) à l'intérieur de la chambre de pression (11) ou est relié à l'alimentation en gaz inerte (18) via un dispositif de couplage (25, 19).

8. Procédé de désinfestation sous pression au moyen d'un gaz inerte, en particulier le CO2, comprenant :
(101) fourniture d'un dispositif de désinfestation sous pression (10) selon la revendication 7
(102) alimentation de la chambre de pression (11) avec au moins une unité d'emballage (15) comprenant un produit (16) à désinfester
(103) fermeture de la chambre de pression (11)
(104) introduction d'un gaz inerte, en particulier de CO2, dans la chambre de pression (11)
(105) fourniture, par le dispositif d'alimentation (1), de gaz inerte dans l'unité d'emballage (15) et dans le produit (16) y contenu
(106) génération de pression et augmentation de la concentration en gaz inerte à l'intérieur de l'unité d'emballage (15) et à l'intérieur du produit (16) y contenu
(107) maintien de la pression générée et de la concentration en gaz inerte
(108) évacuation du gaz inerte et réduction de la pression
(109) ouverture de la chambre de pression (11)
(110) retrait de l'unité d'emballage (15) avec le produit désinfesté (16).

9. Procédé selon la revendication 8, dans lequel, lors de l'alimentation en gaz inerte, le gaz inerte passe de la chambre de pression (11) via l'arrivée de gaz inerte (2) du dispositif d'alimentation (1) dans la zone de distribution de gaz inerte (7).

10. Procédé selon la revendication 8 ou 9, dans lequel, lors de l'alimentation en gaz inerte, le gaz s'écoule directement de l'alimentation en gaz inerte (18) via une conduite de pression (25) à travers l'arrivée de gaz inerte (2) du dispositif d'alimentation (1) dans la zone de distribution de gaz inerte (7).

11. Procédé de désinfestation sous pression au moyen d'un gaz inerte, en particulier le CO2, comprenant :
(201) fourniture d'un dispositif de désinfestation sous pression (10) selon la revendication 7
(202) alimentation de la chambre de pression (11) avec au moins une unité d'emballage (15) comprenant un produit (16) à désinfester
(203) fermeture de la chambre de pression (11)
(204) application d'une pression négative à l'arrivée de gaz inerte (2) du dispositif d'alimentation
(205) évacuation de gaz résiduel de l'unité d'emballage (15) via le dispositif d'alimentation (1), le gaz résiduel s'écoulant directement de l'unité d'emballage (15) par la zone de distribution de gaz inerte (7) et l'arrivée de gaz inerte (2) du dispositif d'alimentation (1)
(206) introduction d'un gaz inerte, en particulier de CO2, dans la chambre de pression (11)
(205) fourniture, par le dispositif d'alimentation (1), de gaz inerte dans l'unité d'emballage (15) et dans le produit (16) y contenu
(207) montée en pression et augmentation de la concentration en gaz inerte à l'intérieur de l'unité d'emballage (15) et à l'intérieur du produit (16) y contenu
(208) maintien de la pression accumulée et de la concentration en gaz inerte
(209) évacuation du gaz inerte et réduction de la pression
(210) ouverture de la chambre de pression (11)
(211) retrait de l'unité d'emballage (15) avec le produit désinfesté (16).

12. Procédé selon la revendication 11, dans lequel la pression négative au niveau de l'arrivée de gaz inerte (2) est générée en évacuant la chambre de pression (11).

13. Procédé selon la revendication 11, dans lequel la pression négative au niveau de l'arrivée de gaz inerte (2) est générée par l'intermédiaire d'une conduite de pression (25) reliée à un dispositif d'évacuation (27).
